# FASCICULE DE BREVET EUROPEEN

(11) **EP 3 589 832 B1**
(45) Date de publication et mention de la délivrance du brevet: **24.05.2023**
(21) Numéro de dépôt: 18709711.8
(22) Date de dépôt: 28.02.2018
(51) Int. Cl.: F02K 3/06, F02C 7/04, F01D 25/16, F04D 29/54, F01D 21/04, F01D 25/28

(54) **AGENCEMENT D'ENTREE DE MOTEUR D'AERONEF COMPRENANT UN DECOUPLEUR MECANIQUE**
TRIEBWERKSEINLAUFANORDNUNG MIT MECHANISCHEM ENTKOPPLER
GAS TURBINE ENGINE INLET ARRANGEMENT COMPRISING A MECHANICAL DECOUPLING DEVICE

(30) Priorité: 28.02.2017 FR 1700201
(43) Date de publication de la demande: 08.01.2020
(73) Titulaire: Safran Aircraft Engines, 75015 Paris (FR)
(72) Inventeur: BENYAMIN, Serge, 77550 Moissy-Cramayel (FR); BEAUJARD, Antoine Jean-Philippe, 77550 Moissy-Cramayel (FR); BOUDEBIZA, Tewfik, 77550 Moissy-Cramayel (FR)
(74) Mandataire: Brevalex
(86) Numéro de dépôt international: PCT/FR2018/050466
(87) Numéro de publication internationale: WO 2018/158537

(56) Documents cités:
- US-A1- 2004 006 967
- US-A1- 2015 226 084
- US-A1- 2016 201 510

## Description

L'invention concerne un agencement d'entrée de moteur d'aéronef comprenant un découpleur mécanique.

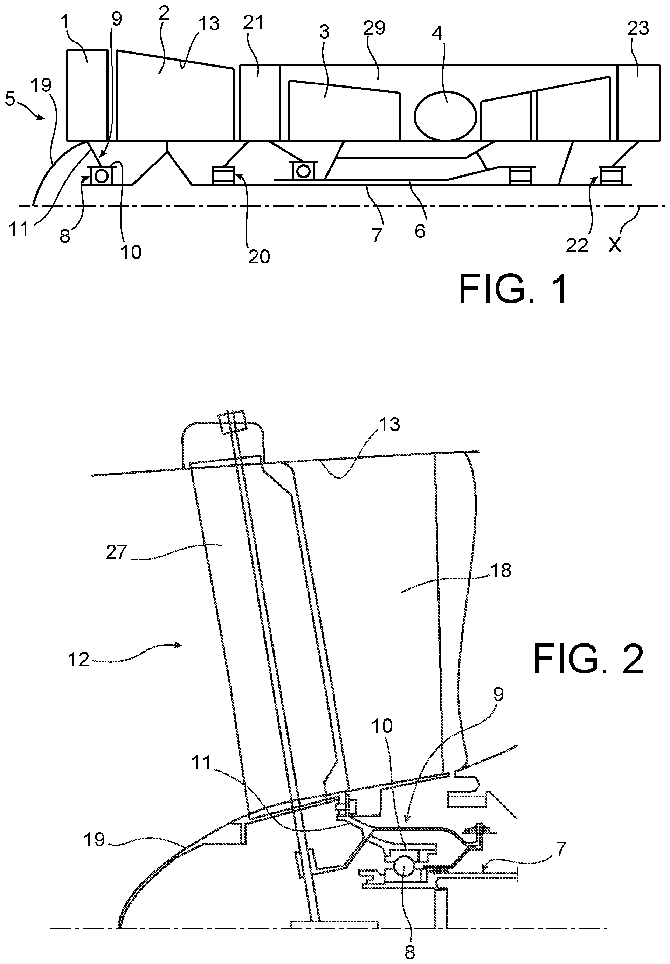

La configuration d'entrée d'une turbomachine à laquelle l'invention pourra être appliquée est décrite au moyen de la figure 1. Elle comprend une entrée 1, suivie classiquement de compresseurs à basse pression 2 et à haute pression 3, d'une chambre de combustion 4, puis de turbines. Une veine 5 annulaire d'écoulement des gaz parcourt la machine sur toute sa longueur et entoure un arbre à haute pression 6 et un arbre à basse pression 7 qui sont concentriques et respectivement associés au compresseur à haute pression 3, et au compresseur à basse pression 2. Les arbres 6 et 7 sont retenus par des roulements, parmi lesquels on mentionnera un roulement 8 d'entrée, adjacent à l'entrée 1, à l'extrémité avant de l'arbre à basse pression 7. La machine représentée est à double flux, la veine 5 se divisant à l'endroit du compresseur à haute pression 3 pour former un flux secondaire 29, ce qui n'est cependant pas indispensable pour implanter l'invention.

Le roulement 8 est retenu (figure 2) dans un support 9 de l'arbre à basse pression 7, qui comprend un manchon 10 entourant la bague extérieure du roulement 8 et une virole 11 tronconique s'étendant vers l'avant de la machine en s'évasant à partir du manchon 10. La virole 11 se raccorde à un carter d'entrée 12, à l'entrée de la veine 5 et formé en partie de bras 27, qui s'étendent radialement vers l'extérieur à travers la veine 5, jusqu'à un carter extérieur 13 qui circonscrit la veine 5. Ces bras 27 sont habituellement nommés redresseurs, car leur but est de redresser le flux avant qu'il n'arrive sur le premier étage d'aubes mobiles et ils ont donc un rôle aérodynamique. Ils peuvent être rayonnants ou s'étendre tangentiellement au moyeu qui délimite la veine 5 au rayon intérieur, avec donc une inclinaison dans la direction angulaire du moteur. En général, ils sont composés d'une partie fixe en amont qui peut présenter un angle par rapport au flux et d'une deuxième partie à calage variable en aval, et il y a entre douze et vingt bras 27. Comme ils supportent le premier palier de l'arbre basse pression 7, ils ont donc également un rôle structural et forment le carter d'entrée 12. La veine 5 est délimitée intérieurement, à l'entrée 1, par un cône d'entrée 19 qui couvre le support 9. Le cône d'entrée 19 fait partie du stator de la turbomachine, les bras 27 le relient au carter extérieur 13, et il entoure le support 9 et le roulement 8. On représente encore un deuxième et un troisième palier 20 et 22, un carter inter-compresseurs 21, et un carter d'échappement 23, dont on décrira plus loin le comportement en liaison à l'invention.

Un fonctionnement anormal de la machine peut apparaître dans certaines situations d'avarie, comme la perte d'une aube du compresseur basse pression 3, le plus souvent une aube 18 du premier étage, après une collision avec un objet étranger, qui introduit un balourd important dans l'arbre concerné, en général l'arbre à basse pression 7. Si un mode propre du rotor concerné (ce rotor comprenant ici le compresseur basse pression 2 et l'arbre basse pression 7) est proche du régime de rotation, le balourd amplifie très fortement la réponse vibratoire, et des efforts considérables sont exercés dans la structure du moteur.

Une possibilité de remédier à cette situation est de renforcer suffisamment la structure de la machine aux endroits sensibles, mais au prix d'un alourdissement conséquent.

On a aussi entrepris de permettre le relâchement des efforts par des découpleurs qui correspondent à des fusibles mécaniques, cédant à l'apparition des efforts élevés consécutif à de cette situation d'avarie. Quand le découpleur est découplé, on diminue le nombre de paliers supportant le rotor, par exemple en laissant seulement un palier au niveau du compresseur basse pression. Le montage du rotor devient alors plus lâche, les modes propres du compresseur sont abaissés pour passer nettement au-dessous du régime de rotation en moulinet défini ci-dessous, et les contraintes dans la structure ne deviennent pas excessives.

Un exemple de découpleur mécanique est décrit dans le document FR-A-2 956 454. Le support d'un des roulements de support de l'arbre susceptible de subir l'avarie est monté sur le reste de la machine par un élément qui se rompt quand un seuil d'effort est atteint ; cet élément consiste souvent en un cercle de vis de fixation spéciales, qui comprennent une partie amincie que les efforts peuvent cisailler. Quand le seuil de rupture est atteint, le roulement cesse d'être soutenu par le reste de la machine et le rotor reste soutenu seulement par un autre roulement, ce qui lui permet de se désaxer par une rotation en moulinet (« windmilling »), mais en exerçant des charges moins élevées sur la structure du moteur et avec une réponse vibratoire moins forte à cause de l'abaissement des modes propres.

De tels découpleurs mécaniques donnent satisfaction, mais il peut toutefois être difficile de construire le découpleur dans le volume de petites dimensions qui contient le support 9 et qui est délimité par le cône d'entrée 19. Il est en effet essentiel que ce dernier reste de petit diamètre, pour laisser, à dimensions extérieures constantes du moteur, une section aussi grande que possible à l'entrée de la veine 5. Or l'addition d'un découpleur mécanique sur le support 9 obligera probablement à élargir le cône d'entrée 19.

US 2016/0201510 correspond au préambule de la revendication 1. Il décrit un moteur dans lequel le cône d'entrée est tournant, entraîné par un bout d'arbre relié à l'arbre basse pression par un réducteur et porte des aubes d'une soufflante d'entrée qui fait entrer l'air environnant dans une veine principale et une veine secondaire extérieure commençant à l'entrée du moteur. Les roulements de support du bout d'arbre sont soutenus par une structure comprenant une partie annulaire de carter intérieur, située dans le prolongement du cône d'entrée, une portion annulaire de carter intermédiaire et des bras reliant les deux portions annulaires. L'ensemble est suspendu à la structure du stator par un découpleur à ressort. Le carter intermédiaire est effilé à l'avant, où il sépare des deux veines, mais il doit tout de même loger le découpleur relativement volumineux. On retrouve donc des contraintes d'aménagement qui obligent soit à élargir le carter intermédiaire, soit à incliner les bras vers l'arrière pour placer le découpleur à une portion plus large du carter intermédiaire, avec un porte-à-faux plus important.

Un premier objet de l'invention est d'améliorer les possibilités de conception et d'aménagement d'un découpleur mécanique servant au montage d'un roulement, en plaçant le découpleur ailleurs qu'à proximité immédiate du roulement, entre lui et un élément du carter d'entrée. Un autre objet de l'invention est de maintenir une bonne rigidité de montage de l'entrée du moteur avant une avarie et la rupture du découpleur, et de maintenir de bonnes caractéristiques de fonctionnement normal du moteur, au moyen d'un dispositif léger, simple et facile à installer, sans imposer de contraintes d'aménagement supplémentaires importantes aux équipements voisins. D'autres objets encore sont de ne pas compliquer l'aménagement du moteur, en plaçant le découpleur à un endroit de celui-ci où les contraintes d'aménagement sont faibles, tout en retirant le découpleur de l'intérieur du cône d'entrée fixe où le volume disponible est réduit, pour maintenir ce cône à un petit diamètre ; de permettre un montage aisé du découpleur; et encore, de maintenir une cohésion raisonnable de la structure quand une avarie est survenue, malgré la rupture du découpleur.

Pour résumer, un aspect général de l'invention est un agencement d'entrée de moteur d'aéronef comprenant un rotor à arbre tournant central, un support de l'arbre entourant l'arbre et porteur d'un palier dans lequel l'arbre est retenu, un carter extérieur entourant une veine d'écoulement de gaz et un carter d'entrée joignant le carter extérieur au support de l'arbre, et, à une jonction entre le carter extérieur et le carter d'entrée, un découpleur mécanique conçu pour céder en cas d'avarie du rotor, dans lequel le découpleur est positionné à une périphérie de la veine d'écoulement des gaz et logé dans une alvéole du carter extérieur, dans lequel le découpleur relie le carter extérieur à des sommets de bras du carter d'entrée, qui s'étendent radialement à travers la veine d'écoulement de gaz, et en ce que l'alvéole est limitée par une face de fond, deux faces latérales raccordant la face du fond à une portion principale, de délimitation de la veine d'écoulement de gaz, du carter extérieur, l'alvéole s'ouvrant sur la veine d'écoulement de gaz, caractérisé en ce que le découpleur comprend un bloc ayant une face radiale intérieure s'appuyant sur le carter d'entrée et une face radiale extérieure s'appuyant sur le carter extérieur.

Une plus grande liberté d'aménagement qu'aux alentours du roulement et de son support existe, ce qui permet de construire le découpleur avec une plus grande liberté, sans contraindre autant la conception de la machine, malgré le plus grand rayon auquel il est placé. Il est en effet facile de façonner une alvéole sur la paroi du carter extérieur, qui reçoit à la fois les moyens de fixation des bras et le découpleur. Cette alvéole représente une modification mineure du profil de la paroi du carter extérieur, ce qui réduit les irrégularités de structure nuisibles à la fluidité de l'écoulement des gaz. Et la liaison directe du découpleur aux bras rayonnants facilite la miniaturisation du raccordement entre le carter extérieur et les bras du carter d'entrée, des découpleurs de petites dimensions pouvant être choisis et logés dans des petites alvéoles.

Le découpleur peut être construit en une matière fragile, qui lui permet de se rompre facilement et immédiatement à l'apparition d'un seuil d'effort, et de créer ainsi un jeu entre le carter extérieur et le carter d'entrée, quand le seuil est atteint.

Une matière convenable peut être une céramique qu'on peut choisir précontrainte ou poreuse pour ajuster le seuil de rupture.

Un autre aspect de l'invention est un moteur d'aéronef comprenant un tel agencement.

D'après certaines caractéristiques optionnelles avantageuses, l'agencement peut comprendre des pièces de liaison du carter extérieur au découpleur traversant le carter extérieur et s'étendant dans l'alvéole : de telles pièces, souvent des vis ou des boulons, permettent de faire participer directement le carter extérieur à la liaison au carter d'entrée par l'intermédiaire du découpleur ; en s'étendant dans le volume interne au carter extérieur et dans l'alvéole, ces pièces ne gênent pas l'écoulement des gaz dans la veine et offrent une grande simplicité de conception.

Enfin, le moteur conforme à l'invention - contenant l'agencement ci-dessus - est avantageusement un moteur à faible dilution des gaz dans lequel le carter d'entrée comporte un cône d'entrée fixe, entouré par une portion du carter extérieur et contenant le support de l'arbre et le palier, le support étant raccordé au carter d'entrée ; et de préférence, la veine d'écoulement est unique à l'entrée du moteur, et le carter d'entrée comprend des bras joignant le cône d'entrée au carter extérieur.

L'invention sera maintenant décrite en détail au moyen des figures, qui en illustrent des réalisations particulières qui ne sont pas exclusives d'autres :
- les figures 1 et 2, déjà décrites, représentent la portion d'entrée d'un moteur d'aéronef et la liaison d'un premier roulement d'un arbre de compresseur à basse pression à un carter d'entrée ;
- la figure 3 représente une réalisation particulière de l'invention ;
- et la figure 4, une autre réalisation ne faisant pas partie de l'invention.

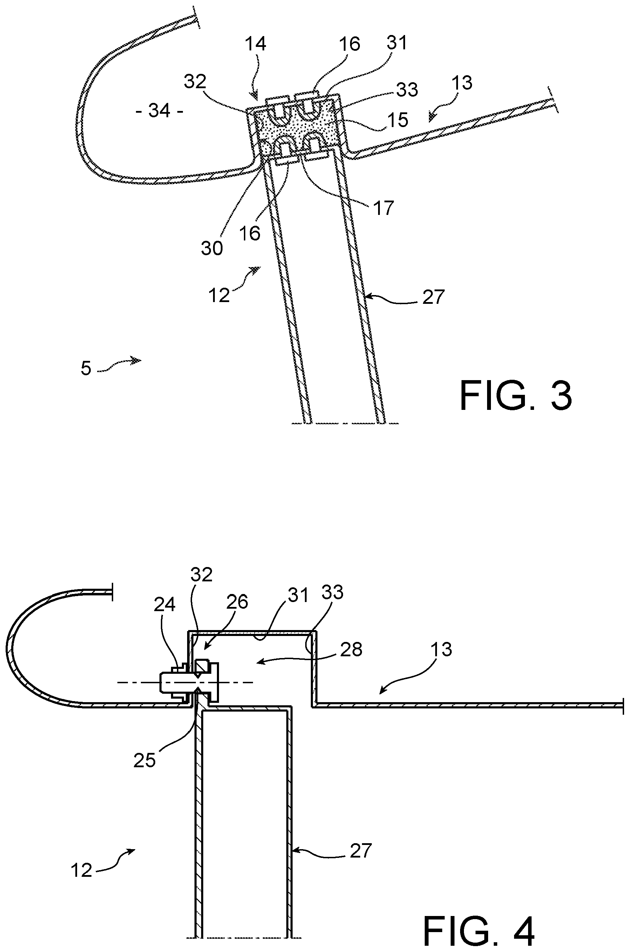

Comme représenté sur la figure 3, le bord extérieur du carter d'entrée 12 comprend désormais un découpleur 14 intercalé à la jonction avec le carter extérieur 13 à l'extrémité extérieure des bras 27. Il consiste en un bloc 15 de matière fragile, s'appuyant par une face radiale intérieure sur le carter d'entrée 12 et par une face radiale extérieure sur le carter extérieur 13, en leur étant fixé au moyen de vis 16. Le carter d'entrée 12 étant composé essentiellement des bras 27, le découpleur 14 peut se trouver à l'extrémité de chacun d'eux ou former une structure annulaire continue ou non, en appui sur un bord extérieur 17 éventuel, continu lui aussi, du carter d'entrée 12. Il est logé dans une alvéole 30 du carter extérieur 13, afin de ne pas perturber la régularité de l'écoulement. L'alvéole 30 est délimitée par une face de fond 31 et deux faces latérales 32 et 33 joignant les bords de la face de fond 31 au carter extérieur 13. L'alvéole 30 peut faire un tour complet du carter extérieur 13 ou s'étendre seulement sur des portions angulaires devant les extrémités des bras 27. L'alvéole 30 s'ouvre seulement vers l'intérieur en direction radiale, c'est-à-dire vers la veine 5, et maintient une isolation complète entre elle et le volume intérieur 34 délimité par le carter extérieur 13 autour de la veine 5. Le bloc 15 est préférentiellement réalisé en céramique fragile apte à se rompre au-dessus d'un seuil de rupture déterminé. Quand un effort dépassant un seuil de rupture lui est imposé, elle devient friable et se rompt, sa matière se disperse et le carter d'entrée 12 peut jouer et osciller en direction radiale par rapport au carter extérieur 13. La céramique peut être poreuse. Le bloc 15 peut être précontraint entre ses deux faces de fixation, pour abaisser si nécessaire le seuil de rupture et modifier la déformation à laquelle la rupture intervient. Des matériaux convenables peuvent être des céramiques à usages techniques, réalisées par un frittage qui leur donne une grande résistance mécanique, et qui résistent aussi à des températures de plusieurs centaines de degrés. Le seuil de rupture du découpleur peut être ajusté par la porosité de la céramique, sa précontrainte, et l'épaisseur de la couche ou du bloc dont elle est constituée. Des exemples de telles céramiques sont l'alumine et le phosphate de calcium.

Quand une rupture d'aube se produit et que le bloc 15 se rompt, le rotor comprenant l'arbre à basse pression 7 n'est plus soutenu par le roulement 8 d'entrée mais par un autre palier 20 situé un peu en aval, à l'endroit d'un carter inter-compresseurs 21 séparant le compresseur basse pression 2 du compresseur haute pression 3, ainsi que par un troisième palier 22 situé tout en aval, à l'endroit d'un carter d'échappement 23, mais qui intervient peu dans le comportement dynamique du rotor à l'endroit du compresseur basse pression 2. On peut donc considérer que cette partie du rotor comprenant le compresseur basse pression 2 n'est plus soutenue que par le palier 20 relié au carter inter-compresseurs 21, ce qui rend son support plus lâche et lui permet de s'axer sur son axe d'inertie propre pendant son autorotation en moulinet et ainsi de transmettre moins d'efforts à la structure de la turbomachine qui comprend le carter d'entrée 12, le carter externe et le carter inter-compresseurs 21. Elle peut donc tourner en moulinet et dissiper ainsi les irrégularités d'effort produites par le balourd. L'entraînement du carter d'entrée 12 (cône d'entrée 19 et bras 27, ces derniers ayant seulement une faible inclinaison en direction axiale du moteur) en oscillations radiales, qui est un aspect original de l'invention, ne modifie pas fondamentalement cet état : les extrémités des bras 27 oscillent radialement dans les volumes occupés auparavant par le bloc 15, et maintenant libérés par sa rupture et la dispersion de sa matière. Les faces latérales 32 et 33 permettent de contenir et de guider les débattements des extrémités des bras 27, qui s'étendent dans la même direction qu'elles, avec un jeu peu important pour permettre ce débattement. La face de fond 31 est à une distance de l'extrémité du bras 27 qui peut être assez réduite, pour éventuellement limiter les débattements angulaires du carter d'entrée 12, en laissant alors les bras 27 buter contre les faces de fond 31; ces débattements sont d'ailleurs souvent peu importants, l'arbre basse pression 7 restant soutenu par les paliers 20 et 22. L'alvéole 30 ne représente pas un affaiblissement du carter extérieur 13, ne perturbe pas de façon importante l'écoulement à travers la veine 5 et ne réduit donc pas fortement le volume intérieur 34, qui reste pour l'essentiel disponible pour d'autres aménagements. Elle contribue enfin à maintenir la cohésion de la structure du moteur en continuant à retenir les extrémités des bras 27 après la rupture du bloc 15.

Le bloc 15 apte à se rompre qu'on a décrit jusqu'à présent pourrait être remplacé par un bloc élastique ou compressible, apte à subir des déformations élastiques ou plastiques et à céder quand un seuil d'effort est atteint, soit à cause des propriétés du matériau du bloc lui-même, soit après rupture de moyens de fixation complémentaires entre le carter d'entrée et le carter extérieur.

Le découpleur de l'invention peut être construit de nombreuses autres façons différentes, grâce à la liberté relative d'aménagement dans le carter extérieur 13, qui permet aussi un montage plus facile, grâce à la facilité d'accès aux alvéoles 30 s'ouvrant sur la veine 5 et au volume plus grand que près du roulement 8. En dehors du cadre de l'invention, des structures mécaniques à boulon cassant peuvent par exemple être utilisées à la place du bloc 15, ainsi que l'illustre l'agencement de la figure 4. Des vis 24 orientées dans la direction axiale X de la machine relient l'extrémité extérieure des bras 27 au carter extérieur 13. Les vis 24 sont des vis fusibles, pourvues d'une restriction de section 25 entre ses raccordements au bras 27 et au carter extérieure 13 et qui constitue une amorce de rupture quand les efforts passant par les bras, exercent un cisaillement sur les vis 24. Un jeu radial 26 est prévu entre les bras 27 et le carter extérieur 13, afin de permettre le débattement libre du rotor, après la rupture ; ce jeu se retrouve aussi dans des réalisations telles que celle de la figure 3, quand le bloc 15 s'est désintégré. Comme dans la réalisation précédente, le découpleur peut être logé à l'extrémité des bras 27, dans des alvéoles 28 du carter extérieur 13 qui sont analogues aux alvéoles 30 de la réalisation de la figure 3. Toutefois, l'utilisation de blocs de matériau fragile peut se révéler avantageuse.

Dans le cas où les bras 27 ne sont pas strictement radiaux, un effort tranchant se crée aux liaisons entre le carter d'entrée 12 et le carter extérieur 13, ce qui facilite la conception du découpleur. En effet, cet effort étant très prépondérant en cas de balourd, il est plus facile de déterminer un seuil de rupture.

## Revendications

1. Agencement d'entrée de moteur d'aéronef comprenant un rotor à arbre (7) tournant central, un support (9) de l'arbre entourant l'arbre et porteur d'un palier (8) dans lequel l'arbre (7) est retenu, un carter extérieur (13) entourant une veine d'écoulement de gaz (5) et un carter d'entrée (12) joignant le carter extérieur (13) au support (9) de l'arbre (7), et, à une jonction entre le carter extérieur (13) et le carter d'entrée (12), un découpleur (14, 24) mécanique conçu pour céder en cas d'avarie du rotor, dans lequel le découpleur (14, 24) est positionné à une périphérie de la veine d'écoulement des gaz (5) et logé dans une alvéole (28, 30) du carter extérieur (13), dans lequel le découpleur (14, 24) relie le carter extérieur (13) à des sommets de bras (27) du carter d'entrée (12), qui s'étendent radialement à travers la veine d'écoulement de gaz (5), et en ce que l'alvéole (28, 30) est limitée par une face de fond (31), deux faces latérales (32, 33) raccordant la face du fond (31) à une portion principale, de délimitation de la veine d'écoulement de gaz (5), du carter extérieur (13), l'alvéole (28, 30) s'ouvrant sur la veine d'écoulement de gaz (5), **caractérisé en ce que** le découpleur (14) comprend un bloc (15) ayant une face radiale intérieure s'appuyant sur le carter d'entrée (12) et une face radiale extérieure s'appuyant sur le carter extérieur (13).

2. Agencement de moteur d'aéronef selon la revendication 1, **caractérisé en ce que** les faces latérales (32, 33) s'étendent dans une même direction que les bras (27) avec un jeu pour contenir et guider des débattements d'extrémités des bras (27) en cas de rupture du découpleur.

3. Agencement d'entrée de moteur d'aéronef selon l'une quelconque des revendications 1 ou 2, **caractérisé en ce qu'**il comprend des éléments de liaison du carter extérieur (13) au découpleur (14) traversant le carter extérieur (13) et s'étendant dans l'alvéole (30).

4. Agencement d'entrée de moteur d'aéronef selon l'une quelconque des revendications 1 à 3, **caractérisé en ce que** le découpleur (14) est construit en une matière fragile.

5. Agencement d'entrée de moteur d'aéronef selon la revendication 4, **caractérisé en ce que** la matière fragile est une céramique.

6. Agencement d'entrée de moteur d'aéronef selon la revendication 4 ou 5, **caractérisé en ce que** la matière fragile est précontrainte.

7. Moteur d'aéronef, **caractérisé par** un agencement conforme à l'une quelconque des revendications précédentes.

8. Moteur d'aéronef selon la revendication 7, **caractérisé en ce que** le carter d'entrée (12) comporte un cône d'entrée (19) fixe, entouré par une portion du carter extérieur (13) et contenant le support (9) de l'arbre (7) et le palier (8), le support (9) étant raccordé au carter d'entrée (12).

9. Moteur d'aéronef selon la revendication 8, **caractérisé en ce que** la veine d'écoulement des gaz (5) est unique à l'entrée du moteur, et le carter d'entrée (12) comprend des bras (27) joignant le cône d'entrée (19) au carter extérieur (13).

## Patentansprüche

1. Triebwerkseinlaufanordnung, umfassend einen Rotor mit einer drehbaren Mittelwelle (7), einen Träger (9) der Welle, der die Welle umgibt und ein Lager (8) trägt, in dem die Welle (7) gelagert ist, ein äußeres Gehäuse (13), das einen Gasstromkanal (5) umgibt, und ein Eingangsgehäuse (12), welches das äußere Gehäuse (13) mit dem Träger (9) der Welle (7) verbindet, und, an einer Verbindungsstelle zwischen dem äußeren Gehäuse (13) und dem Eingangsgehäuse (12), einen mechanischen Entkoppler (14, 24), der ausgestaltet ist, im Fall eines Rotorschadens nachzugeben, wobei der Entkoppler (14, 24) an einer Peripherie des Gasstromkanals (5) angeordnet ist und in einer Kammer (28, 30) des äußeren Gehäuses (13) untergebracht ist, wobei der Entkoppler (14, 24) das äußere Gehäuse (13) mit Armspitzen (27) des Eingangsgehäuses (12) verbindet, die sich radial durch den Gasstromkanal (5) erstrecken, und dadurch, dass die Kammer (28, 30) begrenzt wird durch eine Bodenfläche (31), zwei Seitenflächen (32, 33), welche die Bodenfläche (31) mit einem Hauptabschnitt, zur Begrenzung des Gasstromkanals (5), des äußeren Gehäuses (13) verbinden, wobei die Kammer (28, 30) in den Gasstromkanal (5) mündet, **dadurch gekennzeichnet, dass** der Entkoppler (14) einen Block (15) umfasst, der eine radiale Innenfläche aufweist, die auf das Eingangsgehäuse (12) drückt, und eine radiale Außenfläche, die auf das äußere Gehäuse (13) drückt.

2. Triebwerkseinlaufanordnung nach Anspruch 1, **dadurch gekennzeichnet, dass** sich die Seitenflächen (32, 33) in einer gleichen Richtung wie die Arme (27) erstrecken, mit einem Spiel, um Ausschläge der Enden der Arme (27) im Fall eines Bruchs des Entkopplers zu fassen und zu führen.

3. Triebwerkseinlaufanordnung nach einem der Ansprüche 1 oder 2, **dadurch gekennzeichnet, dass** sie Elemente zur Verbindung des äußeren Gehäuses (13) mit dem Entkoppler (14) umfasst, die das äußere Gehäuse (13) durchsetzen und sich in der Kammer (30) erstrecken.

4. Triebwerkseinlaufanordnung nach einem der Ansprüche 1 bis 3, **dadurch gekennzeichnet, dass** der Entkoppler (14) aus einem zerbrechlichen Material hergestellt ist.

5. Triebwerkseinlaufanordnung nach Anspruch 4, **dadurch gekennzeichnet, dass** das zerbrechliche Material eine Keramik ist.

6. Triebwerkseinlaufanordnung nach einem der Ansprüche 4 oder 5, **dadurch gekennzeichnet, dass** das zerbrechliche Material vorgespannt ist.

7. Triebwerk, **gekennzeichnet durch** eine Anordnung nach einem der vorstehenden Ansprüche.

8. Triebwerk nach Anspruch 7, **dadurch gekennzeichnet, dass** das Eingangsgehäuse (12) einen festsitzenden Eingangskonus (19) umfasst, der von einem Abschnitt des äußeren Gehäuses (13) umgeben ist und den Träger (9) der Welle (7) und das Lager (8) fasst, wobei der Träger (9) mit dem Eingangsgehäuse (12) verbunden ist.

9. Triebwerk nach Anspruch 8, **dadurch gekennzeichnet, dass** der Gasstromkanal (5) am Eingang des Motors einzigartig ist und das Eingangsgehäuse (12) Arme (27) umfasst, die den Eingangskonus (19) mit dem äußeren Gehäuse (13) verbinden.

## Claims

1. An aircraft engine inlet arrangement comprising a central rotating shaft rotor (7), a support (9) of the shaft surrounding the shaft and carrying a bearing (8) in which the shaft (7) is retained, an outer casing (13) surrounding a gas flow path (5) and an inlet casing (12) joining the outer casing (13) to the support (9) of the shaft (7), and, at a junction between the outer casing (13) and the inlet casing (12), a mechanical decoupling device (14, 24) designed to fail in the case of damage to the rotor, wherein the decoupling device (14, 24) is positioned at a periphery of the gas flow path (5) and housed in a cell (28, 30) of the outer casing (13), wherein the decoupling device (14, 24) connects the outer casing (13) at the arm tops (27) of the inlet casing (12), which extend radially through the gas flow path (5), and in that the cell (28, 30) is limited by a bottom face (31), two lateral faces (32, 33) connecting the bottom face (31) to a main portion, for delimiting the gas flow path (5), of the outer casing (13), the cell (28, 30) opening onto the gas flow path (5), **characterised in that** the decoupling device (14) comprises a block (15) having an inner radial face resting on the inlet casing (12) and an outer radial face resting on the outer casing (13).

2. The aircraft engine arrangement according to claim 1, **characterised in that** the lateral faces (32, 33) extend in the same direction as the arms (27) with a clearance to contain and guide end deflections of the arms (27) in the case of breakage of the decoupling device.

3. The aircraft engine inlet arrangement according to any one of claims 1 or 2, **characterised in that** it comprises elements for connecting the outer casing (13) to the decoupling device (14) passing through the outer casing (13) and extending into the cell (30).

4. The aircraft engine inlet arrangement according to any one of claims 1 to 3, **characterised in that** the decoupling device (14) is made of a brittle material.

5. The aircraft engine inlet arrangement according to claim 4, **characterised in that** the brittle material is a ceramic.

6. The aircraft engine inlet arrangement according to claim 4 or 5, **characterised in that** the brittle material is prestressed.

7. An aircraft engine, **characterised by** an arrangement in accordance with any one of the preceding claims.

8. The aircraft engine according to claim 7, **characterised in that** the inlet casing (12) includes a fixed inlet cone (19), surrounded by a portion of the outer casing (13) and containing the support (9) of the shaft (7) and the bearing (8), the support (9) being connected to the inlet casing (12).

9. The Aircraft engine according to claim 8, **characterised in that** the gas flow path (5) is unique to the inlet of the engine, and the inlet casing (12) comprises arms (27) joining the inlet cone (19) to the outer casing (13).
